# EUROPEAN PATENT APPLICATION

(11) **EP 4 729 211 A1**
(43) Date of publication of application: **22.04.2026**
(21) Application number: 25208124.5
(22) Date of filing: 10.10.2025
(51) Int. Cl.: B22F 10/36, B22F 10/366, B22F 12/44, B22F 12/49, B33Y 10/00, B33Y 30/00, B33Y 50/02, B22F 10/28, B29C 64/153, B29C 64/268, B29C 64/393

(54) **APPARATUS FOR ADDITIVE MANUFACTURING OF THREE-DIMENSIONAL OBJECTS**

(30) Priority: 15.10.2024 US 202418915509
(71) Applicant: Concept Laser GmbH, 96215 Lichtenfels (DE)
(72) Inventor: ZIMMERMANN, Maik, 96215 Lichtenfels (DE)
(74) Representative: Openshaw & Co.

(57) **Abstract**

An apparatus for additively manufacturing three-dimensional objects includes a build platform configured to support a powder bed, a laser beam source configured to generate a laser beam, and one or more metamaterial optical devices disposed downstream of the laser beam source. A controller is operably coupled to the one or more metamaterial optical devices for controlling the one or more metamaterial optical devices to perform one or more optical functions including scanning the laser beam over the powder bed, shaping the laser beam, splitting the laser beam, focusing the laser beam, defocusing the laser beam, or superpositioning two or more different phase mask functions.

## Description

### FIELD

The present disclosure relates to additive manufacturing of three-dimensional objects.

### BACKGROUND

Three-dimensional objects may be additively manufactured using a powder bed fusion process in which an energy or laser beam is directed onto a powder bed to melt and/or sinter sequential layers of powder material. The properties of the three-dimensional object formed by melting and/or fusing the powder material may depend at least in part on one or more characteristics of the energy beam. The laser beam has beam properties defined by one or more laser beam parameter(s) or a beam profile defined by one or more laser beam parameter(s).

### BRIEF DESCRIPTION OF THE DRAWINGS

A full and enabling disclosure of the present disclosure, including the best mode thereof, directed to one of ordinary skill in the art, is set forth in the specification, which makes reference to the appended FIGS., in which:
FIG. 1 is a schematic diagram of an apparatus for additively manufacturing a three-dimensional object in accordance with an exemplary aspect of the present disclosure.
FIG. 2 is a schematic diagram of an apparatus for additively manufacturing a three-dimensional object in accordance with another exemplary aspect of the present disclosure.
FIG. 3 is a schematic diagram of an apparatus for additively manufacturing a three-dimensional object in accordance with another exemplary aspect of the present disclosure.
FIG. 4 is a schematic diagram depicting the scanning of a laser beam spot pattern via an apparatus for additively manufacturing a three-dimensional object in accordance with an exemplary aspect of the present disclosure.
FIGS. 5A and 5B are schematic diagrams depicting the scanning of a laser beam spot pattern via an apparatus for additively manufacturing a three-dimensional object in accordance with an exemplary aspect of the present disclosure.
FIG. 6 is a flow diagram depicting an embodiment of a method of additively manufacturing a three-dimensional object in accordance with various aspects of the present disclosure.
FIG. 7 is a block diagram depicting an example computing system according to exemplary embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "upstream" and "downstream" refer to the relative direction with respect to an energy or laser beam along an optical pathway. For example, "upstream" refers to the direction from which the laser beam originates or emanates, and "downstream" refers to the direction to which the laser beam is propagating.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The phrases "from X to Y" and "between X and Y" each refers to a range of values inclusive of the endpoints (e.g., refers to a range of values that includes both X and Y). Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 micrometers (µm) and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The present disclosure is directed to an additive manufacturing apparatus using modulation device. A modulation device such as, by way of non-limiting example, a spatial light modulator may be used to control or modulate an intensity, phase, or polarization of a laser beam. An exemplary embodiment of a spatial light modulator is a liquid crystal on silicon (LCoS) device. Liquid crystals are birefringent such that applying a voltage to a cell, pixel, or modulation segment of the modulation device causes a change in a refractive index of the modulation segment. The addressable modulation segments may be actuated or controlled to cause the corresponding modulation segment to be placed into one or more different modulation states. As used herein, the term "modulation state" refers to a particular state of an element of a modulation device by a particular voltage or electric field applied to the element. However, changing the modulation state of one or more of the modulation segments to change the characteristics of the laser beam incident on a powder bed is limited at least by the layer thickness of the liquid crystal and the inertia of the liquid crystals such that changing or switching between modulation states for one or more modulation segments may adversely affect manufacturing efficiency of the three-dimensional object.

The inventors of the present disclosure found that using a metamaterial optical device as a modulation device configured to modulate and manipulate a laser beam provides greater flexibility in the generation of different laser beam intensity profiles and larger deflection angles for moving the laser beam over a material. The different laser beam intensity profiles and larger deflection angles enable pre-heating, partly pre-heating, and/or melting and consolidation of the powder build material utilizing fast laser beam manipulation times. Embodiments of the present disclosure provide greater modulation capability including shorter switching times and larger deflection and/or steering angles. Embodiments of the present disclosure provide a beam shaping and beam steering setup for the use in laser-based additive manufacturing apparatuses, such as laser powder bed fusion three-dimensional printing machines. Embodiments of the present disclosure utilize a metamaterial-based or metamaterial-supported optical modulation and light manipulation device. In comparison to an LCoS spatial light modulator, by way of non-limiting example, embodiments of the present disclosure using a metamaterial optical device provides a larger modulation capability at shorter switching times and larger deflection or steering angles. The larger modulation capability offers a higher flexibility in the generation of different laser beam intensity profiles as well as larger deflection angles for moving the laser beam over a material and fast modulation of the laser beam to obtain different laser beam intensity profiles. The beam shaping capability includes changing the intensity distribution to generate advantageous laser intensities for an optimized energy dissipation to the material or to correct beam distortion. Additionally, the metamaterial-based modulator offers a beam splitting capability for the flexible and fast generation of multiple spots or spot arrays, which provides a high parallelization of the process and therefore increase of the productivity. The metamaterial optical device may also be used for beam steering providing a larger steering angle than, for example, an LCoS device. The metamaterial modulator device can be used as standalone element or in combination with another beam steering device such as, by way of non-limiting example, galvanometer, polygon or other type of scanning systems.

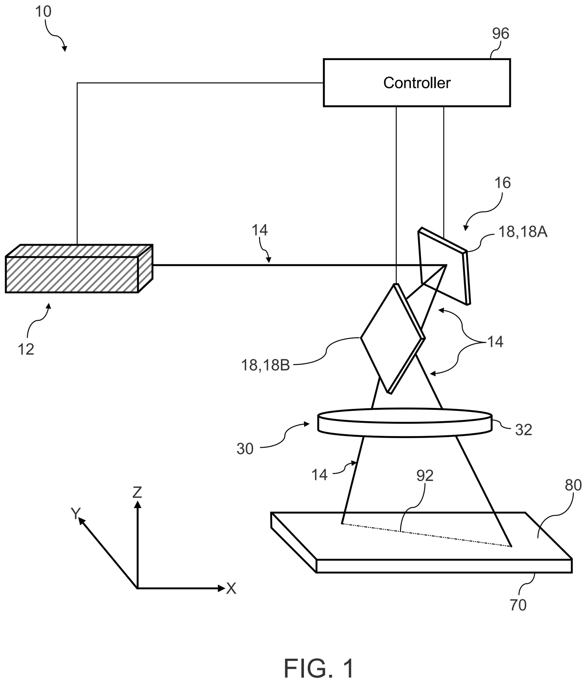

Referring now to FIG. 1, a schematic diagram illustrates an exemplary embodiment of an apparatus 10 for additively manufacturing three-dimensional objects according to the present disclosure. The apparatus 10 includes one or more laser beam sources 12 configured to generate a laser beam 14. The laser beam 14 is directed downstream to interact with a scanning device 16. In exemplary embodiments, the scanning device 16 includes one or more metamaterial optical devices 18. The metamaterial optical device 18 is a silicon-based structure that guides photons using light-bending properties of metamaterial surfaces having nanostructures smaller than the wavelength of light. Thus, the metamaterial optical device 18 provides one or more optical functions including optical modulation and light manipulation. In exemplary embodiments, the metamaterial optical device 18 may be used to shape and/or steer the laser beam 14. The metamaterial optical device 18 may also be used to superposition at least two or more optical functions such as, by way of non-limiting example, at least two phase masks or different phase mask functions. In other words, the superpositioning of phase masks means the summation of at least two phase masks with different optical functions (e.g., lenses, gratings, prisms or arbitrary patterns). Mathematically the superpositioning of phase masks or phase mask functions is a sum modulus 2π. Thus, embodiments of the present disclosure enable the use of different optical functions in parallel on the metamaterial optical device 18 such as, by way of non-limiting example, scanning of the laser beam 14 across a material with simultaneous beam shaping of the laser beam 14. In the illustrated embodiment, the scanning device 16 includes two metamaterial optical devices 18A, 18B such that the metamaterial optical device 18B is located downstream from the metamaterial optical device 18A. The metamaterial optical device 18A may be configured to steer the laser beam 14 in a first direction such as, by way of non-limiting example, the direction corresponding to the X-axis, and the metamaterial optical device 18B may be configured to steer the laser beam 14 in a second direction different than the first direction such as, by way of non-limiting example, the direction corresponding to the Y-axis. Although two metamaterial optical devices 18A, 18B are depicted in FIG. 1 for scanning or steering the laser beam 14 in at least two different directions; it should be understood that a single metamaterial optical device 18 may be used to scan or steer the laser beam 14 in one or more different directions.

In the illustrated embodiment, a controller 96 is communicatively coupled to the one or more laser beam sources 12 and the scanning device 16 or, more particularly, to the one or more metamaterial optical devices 18. The controller 96 is configured to generate control signals to selectively control the laser beam sources 12 to generate the laser beam 14, and to control the one or more metamaterial optical devices 18 to control one or more parameters of the laser beam 14 to produce a modulated laser beam 14 such as, by way of non-limiting example, a modulated shape, profile, or intensity of the laser beam 14, and to scan the laser beam 14 over a target or build plane. In the illustrated embodiment, a build platform 70 is designed to support a powder bed 80 onto which the laser beam 14 is scanned to selectively fuse powder material and build a three-dimensional object layer-by-layer. The scanning device 16, incorporating the metamaterial optical devices 18A and 18B, enable the modulation of the laser beam 14 in terms of its amplitude, phase, or polarization, and the selective scanning of the laser beam 14 across the powder bed 80. In exemplary embodiments, one or more optical devices 30 may be disposed downstream of the scanning device 16 configured to direct the laser beam 14 onto a target plane, such as the powder bed 80. By way of non-limiting example, the one or more optical devices 30 may include one more focusing lenses, such as a f-theta lens 32, that focus the laser beam 14 onto the powder bed 80. The f-theta lens 32 may also be used to correct any optical distortions that might arise due to the wide scanning angles provided by the metamaterial optical devices 18A and 18B. Additionally or alternatively, the modulation capabilities of the one or more metamaterial optical devices 18 may be used to focus the laser beam 14 in addition to laser beam 14 steering (e.g., a lens functionality is included in the one or more metamaterial optical devices 18). The optical functions for steering and focusing of the laser beam 14 can be added by superposition of a phase mask of the one or more metamaterial optical devices 18.

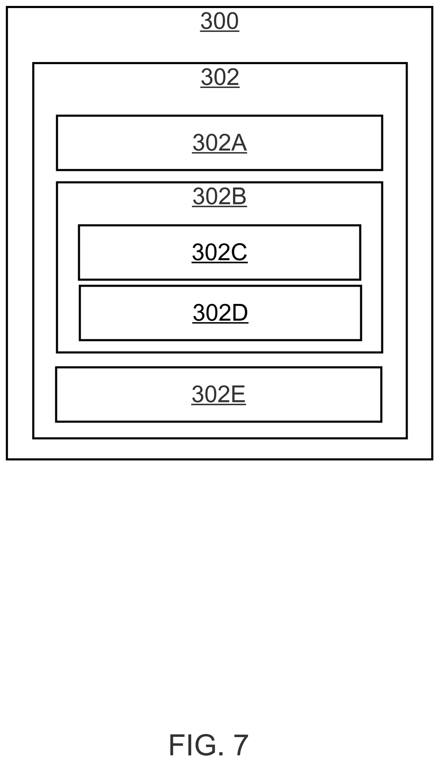

As indicated above, the controller 96 is configured to generate control signals for operating the one or more laser beam sources 12, the one or more metamaterial optical devices 18, as well as potentially other components of the apparatus 10. The controller 96 can dynamically modulate the power of the laser beam 14 via the one or more laser beam sources 12 and dynamically modulate one or more parameters of the laser beam 14 during the manufacturing process via the one or more metamaterial optical devices 18 as the laser beam 14 is scanned along a scanning path 92 over the powder bed 80 to adapt to different design specifications or material properties. The controller 96 can control the one or more metamaterial optical devices 18 to direct or steer the laser beam 14 along the scanning path 92. The controller 96 may be configured similar to exemplary computing devices of the computing system 300 described below with reference to FIG. 7.

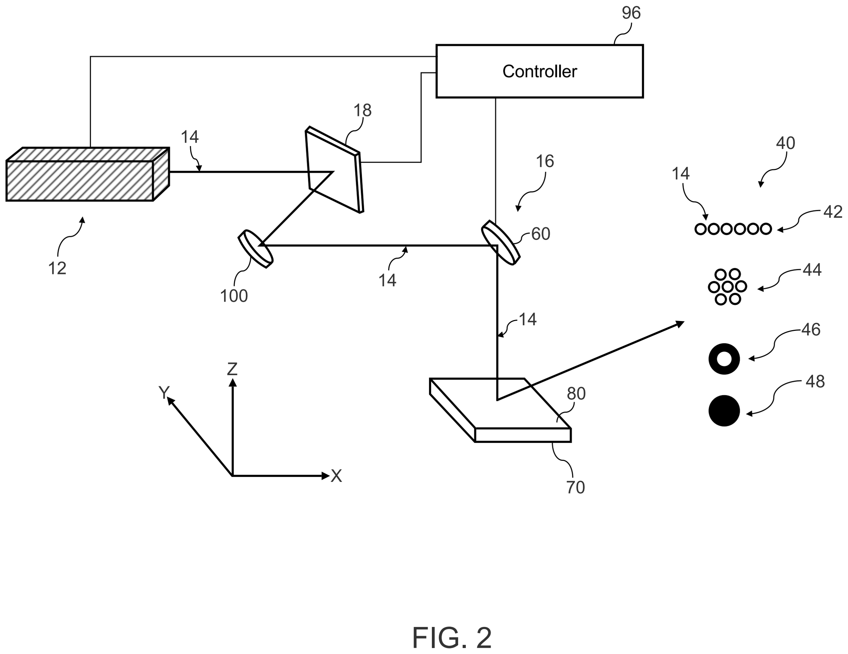

Referring now to FIG. 2, a schematic diagram illustrates another exemplary embodiment of the apparatus 10 for additively manufacturing a three-dimensional object in accordance with an exemplary aspect of the present disclosure. The apparatus 10 may be at least partly configured similar to the apparatus 10 depicted in FIG. 1, like numerals utilized to refer to like elements. The apparatus 10 as depicted in FIG. 2 includes the one or more laser beam sources 12 configured to generate the laser beam 14 that is directed downstream where it is incident upon one or more metamaterial optical devices 18. In the illustrated embodiment, the one or more metamaterial optical devices 18 are configured to shape and/or split the laser beam 14 before directing the laser beam 14 further downstream toward the scanning device 16. In the illustrated embodiment, the one or more metamaterial optical devices 18 are configured to shape and/or split the laser beam 14 to generate one or more spot patterns 40 such as, by way of non-limiting example, a line spot array 42, a hexagonal spot array 44, a ring spot 46, a top hat spot 48 (also referred to as a flat top spot), or any arbitrary laser intensity distribution for optimized energy dissipation to the powder bed 80. A top hat or flat top spot or beam has a uniform or near-uniform energy density or intensity profile at one or more cross-sections through the beam. The one or more metamaterial optical devices 18 may be controlled by the controller 96 to quickly change or switch between different spot patterns 40 as the laser beam 14 is being scanned across the powder bed 80.

Following the interaction of the laser beam 14 with the one or more metamaterial optical devices 18 for shaping and/or splitting of the laser beam 14, the laser beam 14 is then incident upon a mirror device 100 due to a folded setup or arrangement of the apparatus 10. The mirror device 100 is configured to redirect or reflect the laser beam 14 towards the scanning device 16. In the illustrated embodiment, the scanning device 16 includes a galvo scanner device 60. In exemplary embodiments, the galvo scanner device 60 is configured to further direct the laser beam 14 across the build platform 70, which supports the powder bed 80. It should be understood that the galvo scanner device 60 may, additionally or alternatively, be a gantry system, polygon scanner, or other type of scanning mechanism. It should also be understood that the scanning device 16 depicted in FIG. 2 may include one or more metamaterial optical devices 18 as depicted in FIG. 1. Thus, in such an embodiment, one or more metamaterial optical devices 18 may be used to shape and/or split the laser beam 14 followed by one or more additional downstream metamaterial optical devices 18 to scan or direct the laser beam 14 across the powder bed 80.

Similar to as indicated above, the controller 96 is configured to generate control signals for operating the one or more laser beam sources 12, the one or more metamaterial optical devices 18, the scanning device 16, as well as potentially other components of the apparatus 10. The controller 96 can dynamically modulate the power of the laser beam 14 via the one or more laser beam sources 12 and dynamically modulate one or more parameters of the laser beam 14 during the manufacturing process via the one or more metamaterial optical devices 18 as the laser beam 14 is scanned along the scanning path 92 (FIG. 1) over the powder bed 80 to adapt to different design specifications or material properties. The controller 96 can control the scanning device 16 to direct or steer the laser beam 14 along the scanning path 92 (FIG. 1).

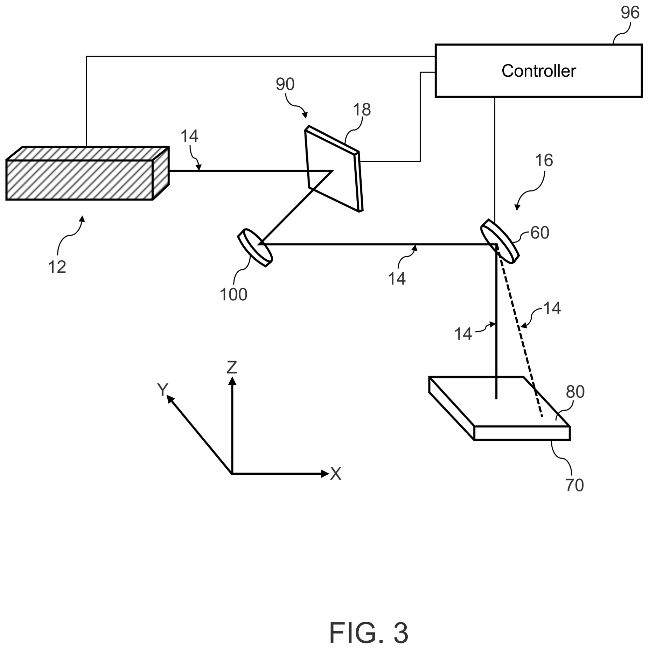

Referring now to FIG. 3, a schematic diagram illustrates another exemplary embodiment of the apparatus 10 for additively manufacturing a three-dimensional object in accordance with an exemplary aspect of the present disclosure. The apparatus 10 may be at least partly configured similar to the apparatus 10 depicted in FIG. 1 or FIG. 2, like numerals utilized to refer to like elements. The apparatus 10 depicted in FIG. 3 includes the one or more laser beam sources 12 configured to generate the laser beam 14 and direct the laser beam 14 downstream to one or more focusing devices 90. In the illustrated embodiment, the one or more focusing devices 90 include one or more metamaterial optical devices 18. The metamaterial optical device 18 is capable of focusing or defocusing the laser beam 14 with respect to a target plane, such as the powder bed 80. Thus, the one or more metamaterial optical devices 18 are configured to adjust the vertical or Z-axis position of the one or more spot patterns 40 (FIG. 2) with respect to the powder bed 80, as well as making scan field corrections.

The focused or defocused laser beam 14 travels downstream to become incident upon the mirror device 100 due to a folded setup or arrangement of the apparatus 10. The mirror device 100 is configured to redirect or reflect the laser beam 14 towards the scanning device 16. In the illustrated embodiment, the scanning device 16 includes the galvo scanner device 60. In exemplary embodiments, the galvo scanner device 60 is configured to further direct the laser beam 14 across the build platform 70, which supports the powder bed 80. It should be understood that the galvo scanner device 60 may, additionally or alternatively, be a gantry system, polygon scanner, or other type of scanning mechanism. It should also be understood that the scanning device 16 depicted in FIG. 3 may include one or more metamaterial optical devices 18 as depicted in FIG. 1. Thus, in such an embodiment, one or more metamaterial optical devices 18 may be used to focus or defocus the laser beam 14 followed by one or more additional downstream metamaterial optical devices 18 to scan or direct the laser beam 14 across the powder bed 80.

Similar to as indicated above, the controller 96 is configured to generate control signals for operating the one or more laser beam sources 12, the one or more metamaterial optical devices 18, the scanning device 16, as well as potentially other components of the apparatus 10. The controller 96 can generate control signals to control a power of the laser beam 14 via the one or more laser beam sources 12 and focus or defocus the laser beam 14 dynamically during the manufacturing process via the one or more metamaterial optical devices 18 as the laser beam 14 is scanned along the scanning path 92 (FIG. 1) over the powder bed 80 to adapt to different design specifications or material properties. The controller 96 can control the scanning device 16 to direct or steer the laser beam 14 along the scanning path 92 (FIG. 1).

It should also be understood that the apparatus 10 may include metamaterial optical devices 18 at a plurality of upstream or downstream locations with respect to each other along an optical path of the laser beam 14 to perform the functions described above in connection with FIGS. 1-3. In an exemplary embodiment, the apparatus 10 may include one or more first metamaterial optical devices 18 positioned to shape and/or split the laser beam, one or more second metamaterial optical devices 18 positioned downstream of the one or more first metamaterial optical devices 18 to focus and/or defocus the laser beam 14, and one or more third metamaterial optical devices 18 located downstream of the one or more second metamaterial optical devices 18 to steer or scan the laser beam 14 across the powder bed. It should be understood that the relative upstream or downstream positions or functions of the first, second, or third metamaterial optical devices 18 may vary.

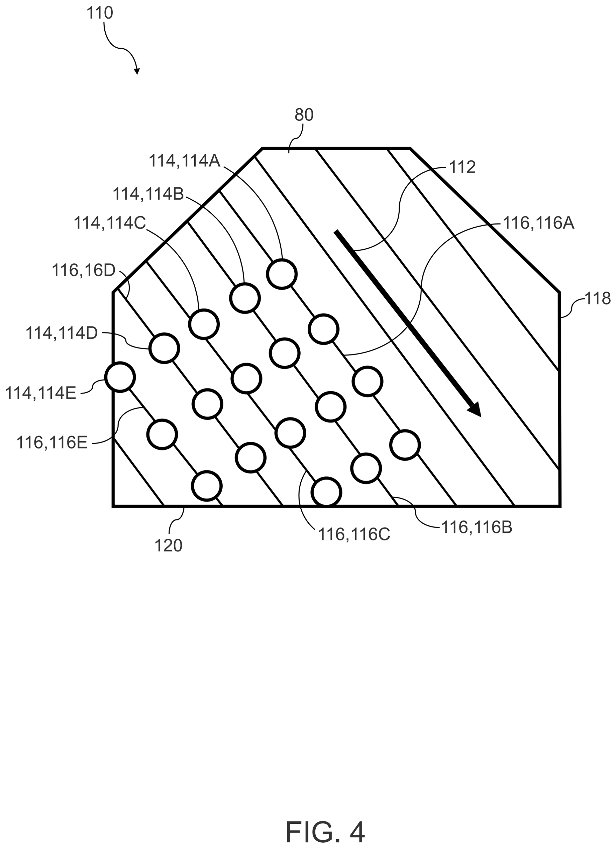

Referring now to FIG. 4, a schematic diagram depicts an exemplary embodiment of a multi-spot pattern 110 generated with the apparatus 10 (FIGS. 1-3) via the laser beam 14 (FIGS. 1-3) according to an exemplary aspect of the present disclosure. The diagram illustrates the dynamic scanning capabilities and the adaptive spot pattern manipulation of the apparatus 10 (FIGS. 1-3), showcasing the multi-spot pattern 110 that is strategically varied during the scanning process.

In the depicted embodiment, the multi-spot pattern 110 consists of multiple beam spots 114, including beam spots 114A through 114E, arranged in a predefined configuration on the powder bed 80. Each beam spot 114 represents a focal point where the laser beam interacts with the powder material to achieve sintering or melting, contributing to the layer-by-layer construction of the three-dimensional object 118. The arrangement and number of beam spots 114 can be adapted based on specific manufacturing requirements or desired material properties.

The scanning of the multi-spot pattern 110 is guided along multiple scan paths 116, including respective scan paths 116A through 116E. Each scan path 116 delineates the trajectory of a corresponding beam spot 114 across the powder bed 80, ensuring comprehensive coverage and efficient material processing. The scan direction 112 depicts the general movement of the beam spots 114 from one side of the powder bed 80 to the other, facilitating an orderly and systematic additive manufacturing process.

During the scanning process, the multi-spot pattern 110 undergoes a transformation from a configuration or array of five beam spots 114 to a configuration or array of three beam spots 114, as illustrated by the transition from the upper section to the lower section of FIG. 4. This change in the number of beam spots 114 is controlled by the controller 96 (FIGS. 1-3), which adjusts the operation of the metamaterial optical devices 18 (FIGS. 1-3) to modify the beam splitting and shaping characteristics. The controller 96 can also control or change the power of the laser beams 14 (FIGS. 1-3) such that each beam spot 114 has the same laser power when switching, for example, from five beam spots 114 to three beam spots 114. In the illustrated embodiment, an edge 120 of the three-dimensional object 118 is also depicted, indicating the boundary of the three-dimensional object 118 being manufactured and defining the limits of the scan paths 116. As depicted in FIG. 4, one or more of the beam spots 114 (e.g., the beam spots 114D and 114E) may be turned off as the laser beam 14 (FIGS. 1-3) approaches or reaches the edge 120 ensuring that the beam spots 114 are dynamically controlled based on the dimensions and contours of the final product.

The ability to dynamically change the number, size, spacing, and other parameters of beam spots and their arrangement during the scanning process not only enhances the flexibility of the manufacturing system and increases productivity of the laser-based powder bed fusion process by parallelization, but also optimizes the use of laser energy to reduce waste and improve the quality of the manufactured object. This dynamic scanning capability is an exemplary embodiment of the apparatus 10 (FIGS. 1-3) according to the present disclosure utilizing one or metamaterial optical devices 18 (FIGS. 1-3).

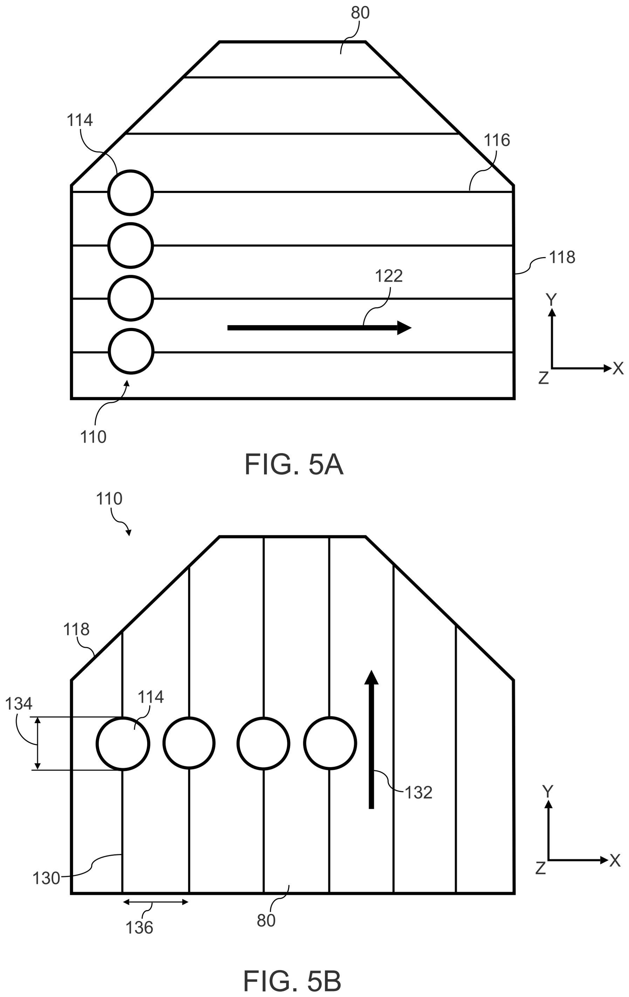

Referring now to FIGS. 5A and 5B, schematic diagrams depicting an exemplary embodiment of a manipulation of an array of beam spots 114 via the apparatus 10 (FIGS. 1-3) for additively manufacturing a three-dimensional object according to aspects of the present disclosure. FIGS. 5A and 5B illustrate the dynamic capabilities of the apparatus 10 (FIGS. 1-3) in adjusting the array of beam spots 114 in terms of scan direction, spot size, and pitch distance between the beam spots 114, which enhances and optimizes the manufacturing process.

In FIG. 5A, the multi-spot pattern 110 is depicted as being scanned across the powder bed 80 in a scan direction 122. FIG. 5A illustrates a series or array of beam spots 114 arranged in a vertical configuration extending in a direction corresponding to the Y-axis, each beam spot 114 representing a focal point where the laser beam 14 (FIGS. 1-3) interacts with the powder material. The scan path 116 shown indicates the trajectory of the beam spots 114 across the powder bed 80, demonstrating a linear scan direction corresponding to the direction of the X-axis. The arrangement of beam spots 114 and their movement along the scan path 116 are controlled by the controller 96 (FIGS. 1-3), which adjusts the operation of the metamaterial optical devices 18 (FIGS. 1-3) to achieve the desired beam alignment and movement.

Referring to FIG. 5B, the configuration of the multi-spot pattern 110 has been altered to move perpendicular to the scan direction 122 shown in FIG. 5A. In FIG. 5B, the multi-spot pattern 110 has been altered to scan in the scan direction 132 along a scan path 130 corresponding to the direction of the Y-axis. Embodiments of the present disclosure enable a fast switching time than devices such as, by way of non-limiting example, LCoS modulation devices, and reduces laser off times to increase productivity. The change in scan direction is controlled via the one or more metamaterial optical devices 18 (FIGS. 1-3) via the controller 96 (FIGS. 1-3). The beam spots 114 in FIG. 5B are also shown with variations in spot size 134 and pitch distance 136 between two or more of the beam spots 114, demonstrating the capability of the apparatus 10 (FIGS. 1-3) to dynamically modify these parameters with faster switching times than other types of spatial light modulators such as, by way of non-limiting example, an LCoS device.

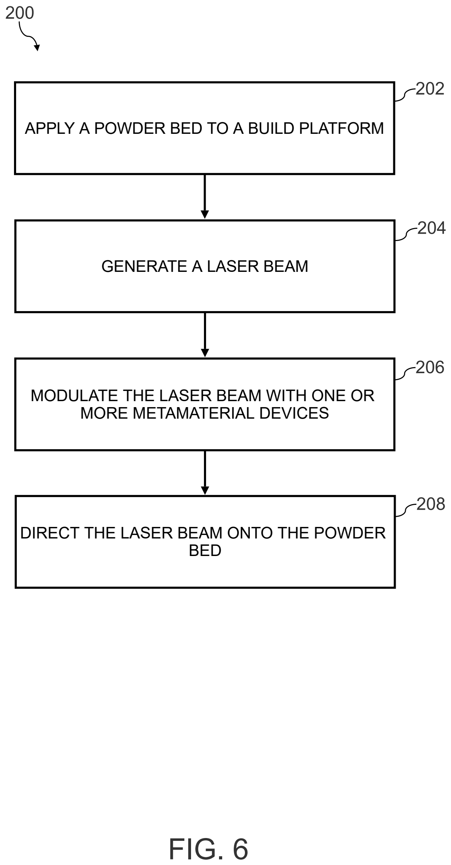

Referring now to FIG. 6, a flow diagram is provided which depicts an embodiment of a method 200 of additively manufacturing three-dimensional objects in accordance with various aspects of the present disclosure. This method 200 illustrates a systematic approach to creating three-dimensional objects using additive manufacturing technology, particularly emphasizing the roles of the laser beam 14 and the one or more metamaterial optical devices 18 in this process.

A first step in the method 200, as shown at 202, involves applying the powder bed 80 to the build platform 70. This step is foundational as the powder bed 80 serves as the medium in which the three-dimensional object will be formed. The powder material can vary based on the properties of the final product, including but not limited to metals, plastics, ceramics, or composite materials.

Following the preparation of the powder bed 80, the method 200 proceeds to step 204, where the laser beam 14 is generated. The generation of the laser beam 14 is carried out by the one or more laser beam source 12, which are configured to produce a beam of sufficient power and wavelength suitable for the material processing involved in additive manufacturing. The laser beam 14 acts as the energy source that selectively pre-heats, fuses or sinters, or post-heats the powder material in the powder bed, layer by layer, to build the three-dimensional object.

Step 206 of the method 200 includes manipulating the laser beam 14 with one or more metamaterial optical devices 18. The one or more metamaterial optical devices 18 are positioned downstream of the laser beam source 12 and are capable of altering the properties of the laser beam, such as its shape, focus, intensity, and direction. The modulation of the laser beam 14 enables precise control of the interaction of the laser beam 14 with the powder bed, which in turn, influences the resolution, strength, and accuracy of the final product. The metamaterial optical devices 18 can include components for focusing or defocusing the beam, shaping the beam into various spot patterns, or splitting the beam into multiple beams to increase the processing efficiency.

The step 208 of the method includes directing the modulated laser beam 14 onto the powder bed 80. The step 208 may be facilitated by a scanning device 16, which can be one or more metamaterial optical devices 18 or another type of device such as, by way of non-limiting example, a galvanometer scanner, a gantry system, or a polygon scanner. The scanning device 16 ensures that the laser beam is scanned over the powder bed 80 in a controlled manner, following predetermined paths that correspond to the cross-sectional layers of the three-dimensional object being produced.

FIG. 7 provides an example computing system 300 according to example embodiments of the present disclosure. The computing devices or elements described herein, such as the controller 96 (FIGS. 1-4), may include various components and perform various functions of the computing system 300 described below, for example.

As shown in FIG. 7, the computing system 300 can include one or more computing device(s) 302. The computing device(s) 302 can include one or more processor(s) 302A and one or more memory device(s) 302B. The one or more processor(s) 302A can include any suitable processing device, such as a microprocessor, microcontroller, integrated circuit, logic device, and/or other suitable processing device. The one or more memory device(s) 302B can include one or more computer-executable or computer-readable media, including, but not limited to, non-transitory computer-readable media, RAM, ROM, hard drives, flash drives, and/or other memory devices.

The one or more memory device(s) 302B can store information accessible by the one or more processor(s) 302A, including computer-readable instructions 302C that can be executed by the one or more processor(s) 302A. The computer-readable instructions 302C can be any set of instructions that when executed by the one or more processor(s) 302A, cause the one or more processor(s) 302A to perform operations. In some embodiments, the computer-readable instructions 302C can be executed by the one or more processor(s) 302A to cause the one or more processor(s) 302A to perform operations, such as any of the operations and functions for which the computing system 300 and/or the computing device(s) 302 are configured, such as controlling the metamaterial optical devices 18 for shaping the laser beam 14, splitting the laser beam 14, focusing and/or defocusing the laser beam 14, scanning of the laser beam 14 across the powder bed 80, changing a profile of the laser beam 14, or changing a scan direction of the laser beam 14, or any combination of the foregoing. The computer-readable instructions 302C can be software written in any suitable programming language or can be implemented in hardware. Additionally, and/or alternatively, the computer-readable instructions 302C can be executed in logically and/or virtually separate threads on processor(s) 302A. The memory device(s) 302B can further store data 302D that can be accessed by the processor(s) 302A. For example, the data 302D can include models, lookup tables, databases, etc.

The computing device(s) 302 can also include a network interface 302E used to communicate, for example, with the other components of the computing system 300 (e.g., via a communication network). The network interface 302E can include any suitable components for interfacing with one or more network(s), including for example, transmitters, receivers, ports, controllers, antennas, and/or other suitable components. One or more devices can be configured to receive one or more commands from the computing device(s) 302 or provide one or more commands to the computing device(s) 302.

Thus, in exemplary embodiments, one or more metamaterial optical devices are used as an optical modulation device to modulate and manipulate a laser beam to generate different laser beam intensity profiles and larger deflection angles for moving the laser beam over a material. In comparison to an LCoS spatial light modulator, by way of non-limiting example, embodiments of the present disclosure using a metamaterial optical device provide a larger modulation capability at shorter switching times and larger deflection or steering angles. The faster modulation capability offers a higher flexibility in the generation of different laser beam intensity profiles, larger deflection angles for moving the laser beam over a material, and greater focusing and de-focusing capability. The beam shaping capability includes changing the intensity distribution to generate advantageous laser intensities for an optimized energy dissipation to the material or to correct beam distortion. Additionally, the metamaterial-based modulator offers a beam splitting capability for the flexible and fast generation of multiple spots or spot arrays, which provides a high parallelization of the process and therefore increase of the productivity. The metamaterial optical device may also be used for beam steering providing a larger steering angle than, for example, an LCoS device. The metamaterial modulator device can be used as standalone element or in combination with another beam steering device such as, by way of non-limiting example, galvanometer, polygon or other type of scanning systems.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:
An apparatus for additively manufacturing three-dimensional objects, the apparatus comprising: a build platform configured to support a powder bed; a laser beam source configured to generate a laser beam; one or more metamaterial optical devices disposed downstream of the laser beam source; and a controller operably coupled to the one or more metamaterial optical devices, the controller being configured to control the one or more metamaterial optical devices to perform one or more optical functions comprising: scanning the laser beam over the powder bed; shaping the laser beam; splitting the laser beam; focusing the laser beam; defocusing the laser beam; or superpositioning of two or more different phase mask functions.

The apparatus of the preceding clause, wherein the one or more metamaterial optical devices comprises: one or more first metamaterial optical devices controllable by the controller to shape the laser beam; and one or more second metamaterial optical devices located downstream of the one or more first metamaterial optical devices, the one or more second metamaterial optical devices controllable by the controller to scan the laser beam over the powder bed.

The apparatus of any previous clause, wherein the one or more metamaterial optical devices comprises: a first metamaterial optical device controllable by the controller to scan the laser beam over the powder bed in a first direction; and a second metamaterial optical device controllable by the controller to scan the laser beam over the powder bed in a second direction different than the first direction.

The apparatus of any previous clause, wherein the second metamaterial optical device is located downstream of the first metamaterial optical device.

The apparatus of any previous clause, wherein the one or more metamaterial optical devices comprises: one or more first metamaterial optical devices controllable by the controller to at least one of focus or defocus the laser beam; and one or more second metamaterial optical devices located downstream of the one or more first metamaterial optical devices, the one or more second metamaterial optical devices controllable by the controller to scan the laser beam over the powder bed.

The apparatus of any previous clause, wherein the one or more metamaterial optical devices are configured to modulate at least one of an amplitude, a phase, or a polarization of the laser beam.

The apparatus of any previous clause, wherein the one or more metamaterial optical devices comprises one or more first metamaterial optical devices controllable by the controller to at least one of focus or defocus the laser beam, and further comprising a scanning device located downstream of the one or more first metamaterial optical devices, the scanning device configured to scan the laser beam across the powder bed.

The apparatus of any previous clause, wherein the scanning device comprises at least one of a galvanometer, a gantry system, or a polygon scanner

The apparatus of any previous clause, wherein the one or more metamaterial optical devices comprises one or more first metamaterial optical devices controllable by the controller to shape the laser beam, and further comprising a scanning device located downstream of the one or more first metamaterial optical devices, the scanning device configured to scan the laser beam across the powder bed.

The apparatus of any previous clause, wherein the one or more metamaterial optical devices comprises one or more first metamaterial optical devices controllable by the controller to split the laser beam, and further comprising a scanning device located downstream of the one or more first metamaterial optical devices, the scanning device configured to scan the laser beam across the powder bed.

The apparatus of any previous clause, further comprising an f-theta lens disposed downstream of the one or more metamaterial optical devices.

The apparatus of any previous clause, wherein the controller is configured to control the one or more metamaterial optical devices to form one or more different spot patterns of the laser beam.

The apparatus of any previous clause, wherein the controller is configured to control the one or more metamaterial optical devices to switch from a first spot pattern of the one or more different spot patterns to a second spot pattern of the one or more different spot patterns during a scan of the laser beam across the powder bed.

The apparatus of any previous clause, wherein the controller is configured to control the one or more metamaterial optical devices to form a multi-spot pattern of the laser beam, and wherein the controller is configured to change a pitch distance between at least two spots of the multi-spot pattern during a scan of the laser beam across the powder bed.

The apparatus of any previous clause, wherein the controller is configured to control the one or more metamaterial optical devices to form one or more spot patterns of the laser beam, and wherein the controller is configured to change a scan direction of at least one spot pattern of the one or more spot patterns as the laser beam is being scanned across the powder bed.

The apparatus of any previous clause, wherein the controller is configured to generate control signals to selectively control the laser beam source.

A method for additively manufacturing three-dimensional objects, the method comprising: generating a laser beam with a laser source; and manipulating the laser beam with one or more metamaterial optical devices disposed downstream of the laser beam source to perform one or more optical functions comprising: scanning the laser beam over a powder bed; shaping the laser beam; splitting the laser beam; focusing the laser beam; defocusing the laser beam; or superpositioning of two or more different phase mask functions.

The method of any previous clause, wherein the one or more metamaterial optical devices comprises one or more first metamaterial optical devices and one or more second metamaterial optical devices located downstream of the one or more first metamaterial optical devices, and wherein: shaping the laser beam comprises shaping the laser beam via the one or more first metamaterial optical devices; and scanning the laser beam comprises scanning the laser beam over the powder bed via the one or more second metamaterial optical devices.

The method of any previous clause, wherein the one or more metamaterial optical devices comprises one or more first metamaterial optical devices and one or more second metamaterial optical devices located downstream of the one or more first metamaterial optical devices, and wherein: splitting the laser beam comprises splitting the laser beam via the one or more first metamaterial optical devices; and scanning the laser beam comprises scanning the laser beam over the powder bed via the one or more second metamaterial optical devices.

The method of any previous clause, wherein the one or more metamaterial optical devices comprises one or more first metamaterial optical devices and one or more second metamaterial optical devices located downstream of the one or more first metamaterial optical devices, and wherein: at least one of the focusing or the defocusing the laser beam comprises at least one of the focusing or the defocusing the laser beam via the one or more first metamaterial optical devices; and scanning the laser beam comprises scanning the laser beam over the powder bed via the one or more second metamaterial optical devices.

The method of any previous clause, wherein the one or more metamaterial optical devices comprises a first metamaterial optical device and a second metamaterial optical device disposed downstream of the first metamaterial optical device, and wherein scanning the laser beam comprises: scanning the laser beam in a first direction via the first metamaterial optical device; and scanning the laser beam in a second direction different than the first direction via the second metamaterial optical device.

The method of any previous clause, further comprising generating one or more control signals, via a controller, for controlling the one or more metamaterial optical devices.

The method of any previous clause, further comprising controlling the one or more metamaterial optical devices to form one or more different spot patterns of the laser beam.

The method of any previous clause, further comprising controlling the one or more metamaterial optical devices to switch from a first spot pattern of the one or more different spot patterns to a second spot pattern of the one or more different spot patterns during a scan of the laser beam across the powder bed.

The method of any previous clause, further comprising: controlling the one or more metamaterial optical devices to form a multi-spot pattern of the laser beam; and controlling the one or more metamaterial optical devices to change a pitch distance between at least two spots of the multi-spot pattern during a scan of the laser beam across the powder bed.

The method of any previous clause, further comprising: controlling the one or more metamaterial optical devices to form one or more spot patterns of the laser beam; and controlling the one or more metamaterial optical devices to change a scan direction of at least one spot pattern of the one or more spot patterns as the laser beam is being scanned across the powder bed.

A non-transitory computer-readable medium comprising computer-executable instructions, which, when executed by a processor associated with an additive manufacturing machine, cause the processor to perform a method comprising: applying a powder bed to a build platform; generating a laser beam with a laser source; and manipulating the laser beam with one or more metamaterial optical devices disposed downstream of the laser beam source to perform one or more optical functions comprising: scanning the laser beam over the powder bed; shaping the laser beam; splitting the laser beam; focusing the laser beam; defocusing the laser beam; or superpositioning of two or more different phase mask functions.

The non-transitory computer-readable medium of any previous clause, wherein the one or more metamaterial optical devices comprises one or more first metamaterial optical devices and one or more second metamaterial optical devices located downstream of the one or more first metamaterial optical devices, and wherein the computer-executable instructions, which when executed by the processor, causes the processor to perform the method comprising: shaping the laser beam comprises shaping the laser beam via the one or more first metamaterial optical devices; and scanning the laser beam comprises scanning the laser beam over the powder bed via the one or more second metamaterial optical devices.

The non-transitory computer-readable medium of any previous clause, wherein the computer-executable instructions, which when executed by the processor, causes the processor to perform the method comprising: directing, via a scanning device disposed downstream of the one or more metamaterial optical devices, the laser beam onto a powder bed.

The non-transitory computer-readable medium of any previous clause, wherein the one or more metamaterial optical devices comprises one or more first metamaterial optical devices and one or more second metamaterial optical devices located downstream of the one or more first metamaterial optical devices, and wherein the computer-executable instructions, which when executed by the processor, causes the processor to perform the method comprising: splitting the laser beam via the one or more first metamaterial optical devices; and scanning the laser beam over the powder bed via the one or more second metamaterial optical devices.

The non-transitory computer-readable medium of any previous clause, wherein the one or more metamaterial optical devices comprises one or more first metamaterial optical devices and one or more second metamaterial optical devices located downstream of the one or more first metamaterial optical devices, wherein the computer-executable instructions, which when executed by the processor, causes the processor to perform the method comprising: at least one of focusing or defocusing the laser beam via the one or more first metamaterial optical devices; and scanning the laser beam over the powder bed via the one or more second metamaterial optical devices.

The non-transitory computer-readable medium of any previous clause, wherein the one or more metamaterial optical devices comprises a first metamaterial optical device and a second metamaterial optical device disposed downstream of the first metamaterial optical device, and wherein the computer-executable instructions, which when executed by the processor, causes the processor to perform the method comprising: scanning the laser beam in a first direction via the first metamaterial optical device; and scanning the laser beam in a second direction different than the first direction via the second metamaterial optical device.

The non-transitory computer-readable medium of any previous clause, wherein the computer-executable instructions, which when executed by the processor, causes the processor to perform the method comprising: generating one or more control signals for controlling the one or more metamaterial optical devices.

The non-transitory computer-readable medium of any previous clause, wherein the computer-executable instructions, which when executed by the processor, causes the processor to perform the method comprising: controlling the one or more metamaterial optical devices to form one or more different spot patterns of the laser beam.

The non-transitory computer-readable medium of any previous clause, wherein the computer-executable instructions, which when executed by the processor, causes the processor to perform the method comprising: controlling the one or more metamaterial optical devices to switch from a first spot pattern of the one or more different spot patterns to a second spot pattern of the one or more different spot patterns during a scan of the laser beam across the powder bed.

The non-transitory computer-readable medium of any previous clause, wherein the computer-executable instructions, which when executed by the processor, causes the processor to perform the method comprising: controlling the one or more metamaterial optical devices to form a multi-spot pattern of the laser beam; and controlling the one or more metamaterial optical devices to change a pitch distance between at least two spots of the multi-spot pattern during a scan of the laser beam across the powder bed.

The non-transitory computer-readable medium of any previous clause, wherein the computer-executable instructions, which when executed by the processor, causes the processor to perform the method comprising: controlling the one or more metamaterial optical devices to form one or more spot patterns of the laser beam; and controlling the one or more metamaterial optical devices to change a scan direction of at least one spot pattern of the one or more spot patterns as the laser beam is being scanned across the powder bed.

An apparatus for additively manufacturing three-dimensional objects, the apparatus comprising: a build platform configured to support a powder bed; a laser beam source configured to generate a laser beam; one or more metamaterial optical devices disposed downstream of the laser beam source and configured to shape the laser beam; and a scanning device located downstream of the one or more metamaterial optical devices configured to steer the laser beam over the powder bed.

An apparatus for additively manufacturing three-dimensional objects, the apparatus comprising: a build platform configured to support a powder bed; a laser beam source configured to generate a laser beam; one or more metamaterial optical devices disposed downstream of the laser beam source and configured to split the laser beam to form a spot pattern; and a scanning device located downstream of the one or more metamaterial optical devices configured to steer the spot pattern over the powder bed.

An apparatus for additively manufacturing three-dimensional objects, the apparatus comprising: a build platform configured to support a powder bed; a laser beam source configured to generate a laser beam; one or more metamaterial optical devices disposed downstream of the laser beam source and configured to focus or defocus the laser beam; and a scanning device located downstream of the one or more metamaterial optical devices configured to steer the focused or defocused laser beam over the powder bed.

The apparatus of any preceding clause, wherein the scanning device comprises at least one of a galvo scanner device, a gantry device, a polygon scanner, or one or more additional metamaterial optical devices.

## Claims

1. An apparatus for additively manufacturing three-dimensional objects, the apparatus comprising:
a build platform configured to support a powder bed;
a laser beam source configured to generate a laser beam;
one or more metamaterial optical devices disposed downstream of the laser beam source; and
a controller operably coupled to the one or more metamaterial optical devices and configured to control the one or more metamaterial optical devices to perform one or more optical functions comprising:
scanning the laser beam over the powder bed;
shaping the laser beam;
splitting the laser beam;
focusing the laser beam;
defocusing the laser beam; or
superpositioning two or more different phase mask functions.

2. The apparatus of claim 1, wherein the one or more metamaterial optical devices comprises:
one or more first metamaterial optical devices controllable by the controller to shape the laser beam; and
one or more second metamaterial optical devices located downstream of the one or more first metamaterial optical devices, the one or more second metamaterial optical devices controllable by the controller to scan the laser beam over the powder bed.

3. The apparatus of any preceding claim, wherein the one or more metamaterial optical devices comprises:
a first metamaterial optical device controllable by the controller to scan the laser beam over the powder bed in a first direction; and
a second metamaterial optical device controllable by the controller to scan the laser beam over the powder bed in a second direction different than the first direction; optionally wherein the second metamaterial optical device is located downstream of the first metamaterial optical device.

4. The apparatus of any preceding claim, wherein the one or more metamaterial optical devices comprises:
one or more first metamaterial optical devices controllable by the controller to at least one of focus or defocus the laser beam; and
one or more second metamaterial optical devices located downstream of the one or more first metamaterial optical devices, the one or more second metamaterial optical devices controllable by the controller to scan the laser beam over the powder bed.

5. The apparatus of any preceding claim, wherein the one or more metamaterial optical devices are configured to modulate at least one of an amplitude, a phase, or a polarization of the laser beam.

6. The apparatus of any preceding claim, further comprising an f-theta lens disposed downstream of the one or more metamaterial optical devices.

7. The apparatus of any preceding claim, wherein the controller is configured to control the one or more metamaterial optical devices to form one or more different spot patterns of the laser beam; optionally wherein the controller is configured to control the one or more metamaterial optical devices to switch from a first spot pattern of the one or more different spot patterns to a second spot pattern of the one or more different spot patterns during a scan of the laser beam across the powder bed.

8. The apparatus of any preceding claim, wherein the controller is configured to control the one or more metamaterial optical devices to form a multi-spot pattern of the laser beam, and wherein the controller is configured to change a pitch distance between at least two spots of the multi-spot pattern during a scan of the laser beam across the powder bed; and/or wherein the controller is configured to control the one or more metamaterial optical devices to form one or more spot patterns of the laser beam, and wherein the controller is configured to change a scan direction of at least one spot pattern of the one or more spot patterns as the laser beam is being scanned across the powder bed.

9. A method for additively manufacturing three-dimensional objects, the method comprising:
generating a laser beam with a laser beam source; and
manipulating the laser beam with one or more metamaterial optical devices disposed downstream of the laser beam source to perform one or more optical functions comprising:
scanning the laser beam over a powder bed;
shaping the laser beam;
splitting the laser beam;
focusing the laser beam;
defocusing the laser beam; or
superpositioning two or more different phase mask functions.

10. The method of claim 9, wherein the one or more metamaterial optical devices comprises one or more first metamaterial optical devices and one or more second metamaterial optical devices located downstream of the one or more first metamaterial optical devices, and wherein:
shaping the laser beam comprises shaping the laser beam via the one or more first metamaterial optical devices; and
scanning the laser beam comprises scanning the laser beam over the powder bed via the one or more second metamaterial optical devices.

11. The method of any one of claims 9 to 10, wherein the one or more metamaterial optical devices comprises one or more first metamaterial optical devices and one or more second metamaterial optical devices located downstream of the one or more first metamaterial optical devices, and wherein:
splitting the laser beam comprises splitting the laser beam via the one or more first metamaterial optical devices; and
scanning the laser beam comprises scanning the laser beam over the powder bed via the one or more second metamaterial optical devices.

12. The method of any one of claims 9 to 11, wherein the one or more metamaterial optical devices comprises one or more first metamaterial optical devices and one or more second metamaterial optical devices located downstream of the one or more first metamaterial optical devices, and wherein:
focusing or defocusing the laser beam comprises focusing or defocusing the laser beam via the one or more first metamaterial optical devices; and
scanning the laser beam comprises scanning the laser beam over the powder bed via the one or more second metamaterial optical devices; and/or wherein the one or more metamaterial optical devices comprises a first metamaterial optical device and a second metamaterial optical device disposed downstream of the first metamaterial optical device, and wherein scanning the laser beam comprises:
scanning the laser beam in a first direction via the first metamaterial optical device; and
scanning the laser beam in a second direction different than the first direction via the second metamaterial optical device.

13. The method of any one of claims 9 to 12, further comprising generating one or more control signals, via a controller, for controlling the one or more metamaterial optical devices.

14. The method of any one of claims 9 to 13, further comprising controlling, via a controller, the one or more metamaterial optical devices to form one or more different spot patterns of the laser beam; optionally further comprising controlling, via the controller, the one or more metamaterial optical devices to switch from a first spot pattern of the one or more different spot patterns to a second spot pattern of the one or more different spot patterns during a scan of the laser beam across the powder bed.

15. A non-transitory computer-readable medium comprising computer-executable instructions, which, when executed by a processor associated with an additive manufacturing machine, cause the processor to perform a method comprising:
generating a laser beam with a laser beam source; and
manipulating the laser beam with one or more metamaterial optical devices disposed downstream of the laser beam source to perform one or more optical functions comprising:
scanning the laser beam over a powder bed;
shaping the laser beam;
splitting the laser beam;
focusing the laser beam;
defocusing the laser beam; or
superpositioning two or more different phase mask functions.
